# EUROPEAN PATENT APPLICATION

(11) **EP 4 818 524 A1**
(43) Date of publication of application: **07.10.2026**
(21) Application number: 24917781.7
(22) Date of filing: 19.01.2024
(51) Int. Cl.: F04D 13/06

(54) **FLUID PUMP AND USE THEREOF FOR COOLING ELECTRIC VEHICLE CHARGING PILE**

(71) Applicant: Johnson Electric International AG, 3280 Murten (CH)
(72) Inventor: WU, ChunFa, Jiangmen, Guangdong 529000 (CN); WANG, Xiaohui, Jiangmen, Guangdong 529000 (CN); ZHANG, Qiuhong, Jiangmen, Guangdong 529000 (CN); XUE, Feng, Jiangmen, Guangdong 529000 (CN)
(74) Representative: Doherty, William
(86) International application number: PCT/CN2024/073293
(87) International publication number: WO 2025/152158

(57) **Abstract**

The present invention discloses a fluid pump and the use thereof for cooling an electric vehicle charging pile. The fluid pump includes a high-pressure fluid region generated by the pump head and a low-pressure fluid region surrounding the high-pressure fluid region, fluid being adapted to be discharged from the low-pressure fluid region via the high-pressure fluid region, and a rotor of the motor being cooled by low-pressure fluid in the low-pressure fluid region. The fluid pump of the present invention has low pressure-resistance requirements for rotor material, and even if internal leakage occurs in the high-pressure fluid region, the fluid pump can still operate without failure.

## Description

### TECHNICAL FIELD

The present invention relates to a pump, and more particularly to a fluid pump and its use for cooling electric vehicle charging piles.

### BACKGROUND TECHNIQUE

A fluid pump generally comprises a motor and a pump head. Its operating principle is that a shaft of the motor drives an impeller in the pump head to rotate, causing the liquid to undergo vortex motion, thereby achieving suction and discharge of the liquid. Since a rotor of the motor generates a large amount of heat when rotating at high speed, in practice the liquid is usually used to cool the rotor. However, in existing fluid pumps, the rotor is typically cooled by high-pressure fluid that has been pressurized by the impeller, which not only imposes high pressure-resistance requirements on the rotor material, but also makes the pump prone to internal leakage and consequent failure.

### SUMMARY OF THE INVENTION

In view of this, the present invention aims to provide a fluid pump and its use for cooling electric vehicle charging piles.

To this end, in one aspect, the present invention provides a fluid pump, the fluid pump includes a high-pressure fluid region generated by the pump head and a low-pressure fluid region surrounding the high-pressure fluid region, fluid being adapted to be discharged from the low-pressure fluid region via the high-pressure fluid region, and a rotor of the motor being cooled by low-pressure fluid in the low-pressure fluid region.

In another aspect, the present invention provides the use of the fluid pump for cooling electric vehicle charging piles.

Compared with the existing technology, the rotor of the fluid pump of the present invention is cooled by low-pressure fluid, thereby effectively reducing the pressure-resistance requirements on rotor material. More importantly, even if leakage occurs in the high-pressure fluid region, since the high-pressure fluid region is surrounded by the low-pressure fluid region, the leaked fluid will flow into the low-pressure fluid region, and the fluid pump can still operate without failure.

### DESCRIPTION OF THE DRAWINGS

Fig. 1 is a perspective schematic view of a fluid pump according to a first embodiment of the present invention.
Fig. 2 is a simplified internal schematic view of the fluid pump shown in Fig. 1.
Fig. 3 is a simplified internal schematic view of a fluid pump according to a second embodiment of the present invention.

### DETAILED DESCRIPTION OF THE PREFERRED EMBODIMENTS

The present invention will be described in detail below in conjunction with the accompanying drawings and specific embodiments, so that the technical solutions of the present invention and their advantageous effects become clearer. It can be understood that the drawings are provided only for reference and illustration, and are not intended to limit the present invention. The dimensions shown in the drawings are merely for facilitating clear description and do not define proportional relationships.

In the description of the present invention, it is to be understood that the terms "central," "longitudinal," "lateral," "upper," "lower," "front," "rear," "left," "right," "vertical," "horizontal," "top," "bottom," "inner," "outer," "axial," "radial," "circumferential," and the like indicating orientations or positional relationships are based on the orientations or positional relationships shown in the drawings, and are used merely for facilitating the description of the present invention and simplifying the description, rather than indicating or implying that the referenced devices or elements must have a particular orientation or be constructed and operated in a particular orientation. Therefore, they should not be construed as limiting the invention.

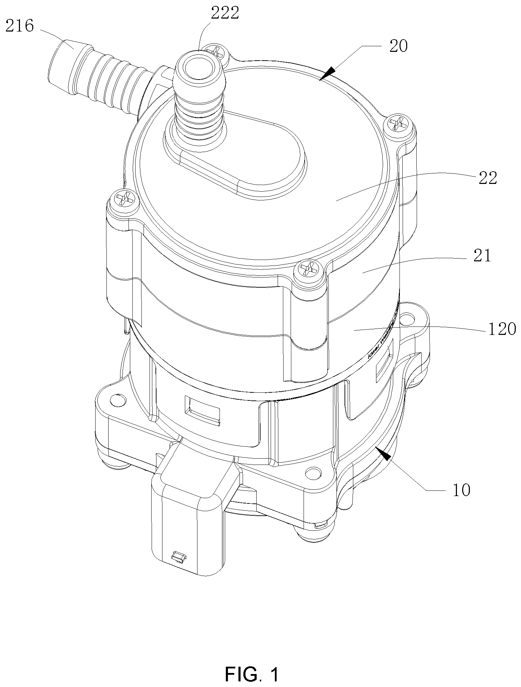

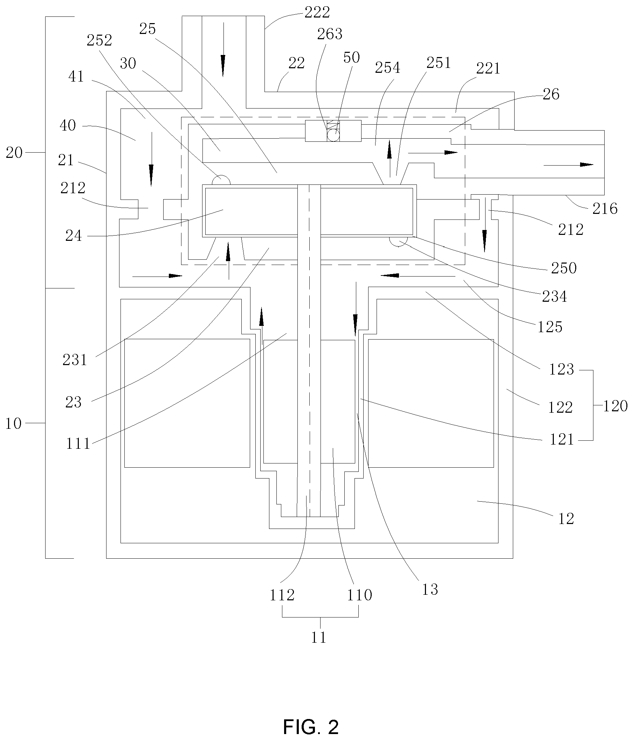

With reference to Fig. 1 and Fig. 2, a fluid pump according to a first embodiment of the present invention includes a motor 10 and a pump head 20. The fluid pump includes a high-pressure fluid region 30 generated by the pump head 20 (substantially corresponding to the region within the dashed box shown in Fig. 2) and a low-pressure fluid region 40 (substantially corresponding to the region outside the dashed box shown in Fig. 2) surrounding the high-pressure fluid region 30, fluid being adapted to be discharged from the low-pressure fluid region 40 via the high-pressure fluid region 30. A rotor 11 of the motor 10 is cooled by low-pressure fluid in the low-pressure fluid region 40, thereby reducing the pressure-resistance requirements on the material of the rotor 11. In particular, the low-pressure fluid region 40 surrounds the high-pressure fluid region 30. Thus, even if leakage occurs in the high-pressure fluid region 30, since the high-pressure fluid region 30 is surrounded by the low-pressure fluid region 40, the leaked fluid will flow into the low-pressure fluid region 40, and the fluid pump can still operate without failure.

Specifically, in this embodiment, the motor 10 includes the rotor 11 and a stator 12 surrounding the rotor 11. An annular air gap 13 is provided between the stator 12 and the rotor 11, whereby the rotor 11 can rotate relative to the stator 12. The low-pressure fluid region 40 includes the annular air gap 13 between the stator 12 and the rotor 11 of the motor 10. Thus, the rotor 11 can be cooled by low-pressure fluid in the low-pressure fluid region 40 (specifically in the annular air gap 13).

More specifically, in this embodiment, the rotor 11 includes a rotor core 110 and a rotating shaft 112 and the like, the rotating shaft 112 being connected to the rotor core 110 to rotate synchronously therewith. The stator 12 includes a sleeve-shaped stator housing 120 and a stator core with windings (not shown) accommodated in the stator housing 120, and the like. The stator housing 120 includes an inner cylinder 121, an outer cylinder 122, and an annular end wall 123 connecting one end of the inner cylinder 121 and one end of the outer cylinder 122. The rotor core 110 is accommodated in the inner cylinder 121 of the stator housing 120, and the annular air gap 13 is defined therebetween. In this embodiment, a cavity 111 is defined between an axial top end of the rotor core 110 and the annular end wall 123, and the cavity 111 is in communication with the annular air gap 13.

In this embodiment, the pump head 20 includes a pump casing 21, an end cover 22, a front cover 23, an impeller 24, a rear cover 25, and a sealing cover 26. A liquid outlet pipe 216 is provided on a radial side of the pump casing 21. The end cover 22 and the stator housing 120 are respectively disposed at two axial ends of the pump casing 21 and are fixedly connected to the pump casing 21 (for example, by screws). A liquid inlet pipe 222 is provided at an end of the end cover 22 facing away from the pump casing 21. The front cover 23 and the rear cover 25 are fixedly connected to the pump casing 21 (for example, by screws), and the front cover 23 and the rear cover 25 jointly enclose an accommodating chamber 250 for accommodating the impeller 24. The sealing cover 26 is fixedly connected to the rear cover 25 (for example, by screws). The rotating shaft 112 of the rotor 11 passes through the front cover 23 and is connected to the impeller 24 so as to drive the impeller 24 to rotate.

In this embodiment, in addition to the annular air gap 13, the low-pressure fluid region 40 further includes an annular chamber 41 that surrounds the high-pressure fluid region 30. In this embodiment, the annular chamber 41 is jointly enclosed by the stator housing 120, the pump casing 21, the end cover 22, the front cover 23, and the sealing cover 26.

Specifically, the annular chamber 41 includes a liquid inlet chamber 221 jointly enclosed by the end cover 22 and the sealing cover 26, one or more first through-holes 212 which axially penetrate the pump casing 21 and are distributed in the circumferential direction of the pump casing 21, and a radial flow passage 125 jointly enclosed by the front cover 23 and the annular end wall 123 of the stator housing 120. A pipe chamber of the liquid inlet pipe 222 is in communication with the liquid inlet chamber 221, the liquid inlet chamber 221 is in communication with an axial upper end of the first through-hole(s) 212, an axial lower end of the first through-hole(s) 212 is in communication with the radial flow passage 125, and the radial flow passage 125 is in communication with the annular air gap 13, which is located axially below the annular chamber 41, via the cavity 111.

In this embodiment, the front cover 23 is provided with a liquid inlet opening 231 that at least axially penetrates the front cover 23. The liquid inlet opening 231 is axially adjacent to the annular air gap 13 and is in communication with the cavity 111 and/or the radial flow passage 125. The rear cover 25 is provided with a liquid outlet opening 251 that at least axially penetrates the rear cover 25, and the liquid outlet opening 251 is axially away from the annular air gap 13. The liquid outlet opening 251 and the liquid inlet opening 231 are both in communication with the accommodating chamber 250.

Preferably, in order to improve the hydrodynamics of the fluid in the accommodating chamber 250, end faces of the front cover 23 and the rear cover 25 corresponding to the accommodating chamber 250 are respectively recessed to form annular fluid grooves 234 and 252. The liquid inlet opening 231 is preferably provided at a starting point of the corresponding fluid groove 234, and the liquid outlet opening 251 is preferably provided at an end point of the corresponding fluid groove 252.

In this embodiment, the rear cover 25 and the sealing cover 26 jointly enclose a liquid outlet chamber 254, and the liquid outlet chamber 254 is in communication with the liquid outlet opening 251 and the liquid outlet pipe 216. It can be observed that, in this embodiment, the liquid inlet chamber 221 and the liquid outlet chamber 254 are respectively located at two axial ends of the sealing cover 26.

Preferably, the pump head 20 further includes a relief valve 50, which is located between the high-pressure fluid region 30 and the low-pressure fluid region 40. When a fluid pressure in the high-pressure fluid region 30 is greater than a rated value, the relief valve 50 opens so that a small portion of the fluid leaks from the high-pressure fluid region 30 into the low-pressure fluid region 40, thereby reducing the fluid pressure in the high-pressure fluid region 30. After the fluid pressure in the high-pressure fluid region 30 has returned to below the rated value, the relief valve 50 closes.

Specifically, in this embodiment, the relief valve 50 is provided on the sealing cover 26. A second through-hole 263 that axially penetrates the sealing cover 26 is formed in a middle portion of the sealing cover 26. The relief valve 50 is provided in the second through-hole 263 of the sealing cover 26. When the relief valve 50 is closed, the liquid outlet chamber 254 and the liquid inlet chamber 221 are not directly in communication with each other. When the relief valve 50 is open, the liquid outlet chamber 254 is directly in communication with the liquid inlet chamber 221 via the second through-hole 263.

In the fluid pump of this embodiment, during use, fluid enters the liquid inlet chamber 221 from the liquid inlet pipe 222, then passes through the first through-hole 212, the radial flow passage 125, and the cavity 111 to enter the annular air gap 13 so as to cool the rotor 11 (since the relief valve 50 is closed under normal conditions, the fluid cannot directly enter the liquid outlet chamber 254 from the liquid inlet chamber 221). In this process, the fluid is in a low-pressure state. In other words, in this embodiment, the fluid enters the annular air gap 13 from the annular chamber 41 to cool the rotor 11.

Subsequently, the fluid flows back to the annular chamber 41 (specifically, to the radial flow passage 125), enters the accommodating chamber 250 via the liquid inlet opening 231, is driven by the impeller 24 and becomes high-pressure fluid, then flows out to the liquid outlet chamber 254 via the liquid outlet opening 251, and finally is discharged from the liquid outlet pipe 216. In this process, the fluid is in a high-pressure state, so it can be said that, in this embodiment, the high-pressure fluid region 30 includes the accommodating chamber 250 and the liquid outlet chamber 254.

It can be observed that, in this embodiment, the low-pressure fluid region 40 fully encloses the high-pressure fluid region 30 in all directions: in the circumferential direction via the first through-hole(s) 212, at an upper axial end via the liquid inlet chamber 221, and at a lower axial end via the radial flow passage 125, the cavity 111, and the annular air gap 13. Therefore, even when the fluid pressure in the high-pressure fluid region 30 exceeds the rated value and the relief valve 50 opens so that part of the fluid flows from the liquid outlet chamber 254 into the liquid inlet chamber 221 (i.e., leakage occurs in the high-pressure fluid region 30), since the high-pressure fluid region 30 is fully enclosed by the low-pressure fluid region 40, the leaked fluid will flow into the low-pressure fluid region 40, and the fluid pump can still operate without failure.

It should be understood that the specific structure of the above low-pressure fluid region 40 and high-pressure fluid region 30, and the specific flow path of the fluid, are shown only by way of example. In other embodiments, the low-pressure fluid region 40 may not include the cavity 111, or the low-pressure fluid region 40 may use other alternative structures to the first through-hole(s) 212 to communicate the liquid inlet chamber 221 with the annular air gap 13. In some embodiments, the high-pressure fluid region 30 may include only a single chamber, without being divided into the above accommodating chamber 250 and liquid outlet chamber 254.

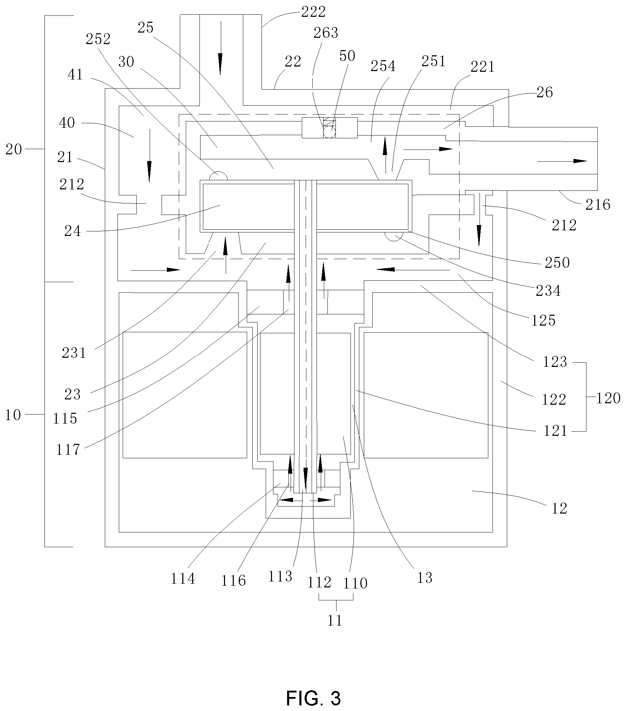

Please refer to Fig. 3, a fluid pump according to a second embodiment of the present invention is generally the same as the fluid pump according to the above first embodiment, and the similarities will not be described in detail again. The main difference between the two lies in that, in this embodiment, the rotor 11 is cooled by a portion of the fluid from the high-pressure fluid region 30, which flows into the annular air gap 13 after being decelerated.

Specifically, a third through-hole 113 that axially penetrates the rotating shaft 112 is defined in the rotating shaft 112. A portion of the fluid in the high-pressure fluid region 30 (specifically, in the accommodating chamber 250) is adapted to flow axially downward through the third through-hole 113 to a position below the rotating shaft 112, then flow radially outward, and subsequently flow axially upward so as to decelerate while passing through the annular air gap 13 to cool the rotor 11.

In this embodiment, the motor 10 further includes a first bearing 114 and a second bearing 115 sleeved on the rotating shaft 112. The first bearing 114 and the second bearing 115 are respectively located at two axial ends of the rotor core 110. In this embodiment, the first bearing 114 and the second bearing 115 are bush bearings. A first clearance 116 is defined between the first bearing 114 and the rotating shaft 112, and the first bearing 114 is in an interference fit with the inner cylinder 121 of the stator housing 120. A second clearance 117 is defined between the second bearing 115 and the rotating shaft 112, and the second bearing 115 is in an interference fit with the inner cylinder 121 of the stator housing 120.

In the fluid pump of this embodiment, during use, fluid enters the liquid inlet chamber 221 from the liquid inlet pipe 222, then passes through the first through-hole(s) 212 and the radial flow passage 125, and enters the accommodating chamber 250 via the liquid inlet opening 231, where it is driven by the impeller 24 and becomes high-pressure fluid. At this time, most of the fluid flows out to the liquid outlet chamber 254 via the liquid outlet opening 251 and is discharged from the liquid outlet pipe 216. However, a small portion of the fluid in the accommodating chamber 250 flows axially downward through the third through-hole 113 in the rotating shaft 112 to a position below the rotating shaft 112, then flows radially outward, and subsequently flows axially upward through the first clearance 116 while being decelerated, then enters the annular air gap 13 to cool the rotor 11 of the motor, and thereafter flows back to the annular chamber 41 (specifically, to the radial flow passage 125) through the second clearance 117, enters the accommodating chamber 250 again via the liquid inlet opening 231, then flows out to the liquid outlet chamber 254 via the liquid outlet opening 251, and is finally discharged from the liquid outlet pipe 216.

The fluid pump of the above embodiments is preferably suitable for cooling electric vehicle charging piles, in particular for cooling cables of electric vehicle charging piles. Of course, in other embodiments, the fluid pump may also be used for cooling other objects.

The above description is only preferred specific embodiments of the present invention. The scope of protection of the present invention is not limited to the embodiments listed above. Any simple modification or equivalent substitution of the technical solutions that can be readily derived by a person skilled in the art within the technical scope disclosed by the present invention shall fall within the scope of protection of the present invention.

## Claims

1. A fluid pump, comprising a motor and a pump head, **characterized in that** the fluid pump comprises a high-pressure fluid region generated by the pump head and a low-pressure fluid region surrounding the high-pressure fluid region, fluid being adapted to be discharged from the low-pressure fluid region via the high-pressure fluid region, and a rotor of the motor being cooled by low-pressure fluid in the low-pressure fluid region.

2. The fluid pump according to claim 1, **characterized in that** the pump head comprises a relief valve, the relief valve being located between the high-pressure fluid region and the low-pressure fluid region, and when a fluid pressure in the high-pressure fluid region is greater than a rated value, the relief valve opens and allows part of the fluid to flow from the high-pressure fluid region into the low-pressure fluid region.

3. The fluid pump according to claim 1, **characterized in that** the low-pressure fluid region comprises an annular chamber surrounding the high-pressure fluid region and an annular air gap between a stator and the rotor of the motor, the annular air gap being located at one axial end of the annular chamber and being in communication with the annular chamber.

4. The fluid pump according to claim 3, **characterized in that** a liquid inlet opening of the high-pressure fluid region is axially adjacent to the annular air gap between the stator and the rotor of the motor, and a liquid outlet opening of the high-pressure fluid region is axially away from the annular air gap between the stator and the rotor of the motor.

5. The fluid pump according to claim 3, **characterized in that** the fluid is adapted to enter the annular air gap between the stator and the rotor of the motor from the annular chamber so as to cool the rotor of the motor, and then flow back to the annular chamber and be discharged via the high-pressure fluid region.

6. The fluid pump according to claim 3, **characterized in that** a portion of the fluid in the high-pressure fluid region is decelerated and then enters the annular air gap between the stator and the rotor of the motor so as to cool the rotor of the motor, and then flows back to the annular chamber and is discharged via the high-pressure fluid region.

7. The fluid pump according to claim 6, **characterized in that** a rotating shaft of the motor is provided with a through-hole axially penetrating the rotating shaft itself, and a portion of the fluid in the high-pressure fluid region is adapted to flow axially downward through the through-hole to a position below the rotating shaft, then flow radially outward, and subsequently flow axially upward so as to decelerate while passing through the annular air gap between the stator and the rotor of the motor, thereby cooling the rotor of the motor.

8. The fluid pump according to claim 7, **characterized in that** the motor further comprises a first bearing and a second bearing sleeved on the rotating shaft, a first clearance being defined between the first bearing and the rotating shaft, and a second clearance being defined between the second bearing and the rotating shaft, and the fluid from the through-hole of the rotating shaft is adapted to flow axially upward through the first clearance so as to decelerate while passing through the annular air gap between the stator and the rotor of the motor, thereby cooling the rotor of the motor, and then flow back to the annular chamber through the second clearance.

9. The fluid pump according to claim 3, **characterized in that** the high-pressure fluid region is surrounded in both circumferential direction and axial directions by the annular chamber of the low-pressure fluid region.

10. Use of the fluid pump according to any one of claims 1 to 9 for cooling an electric vehicle charging pile.
